# EUROPEAN PATENT SPECIFICATION

(11) **EP 2 889 554 B1**
(45) Date of publication and mention of the grant of the patent: **22.11.2023**
(21) Application number: 14196943.6
(22) Date of filing: 09.12.2014
(51) Int. Cl.: F25B 13/00, F24F 3/06

(54) **Air conditioning system**
Klimaanlagensystem
Système de climatisation

(30) Priority: 24.12.2013 KR 20130162610
(43) Date of publication of application: 01.07.2015
(73) Proprietor: LG Electronics Inc., Yeongdeungpo-gu Seoul 150-721 (KR)
(72) Inventor: Jung, Jaehwa, 153-802 Seoul (KR); Song, Chiwoo, 153-802 Seoul (KR); Kim, Kakjoong, 153-802 Seoul (KR)
(74) Representative: Vossius & Partner Patentanwälte Rechtsanwälte mbB

(56) References cited:
- EP-A1- 0 448 345
- EP-A1- 1 371 914
- EP-A1- 2 495 512
- WO-A1-2013/146870

## Description

### BACKGROUND

The present invention relates to an air conditioning system.

Air conditioners are appliances that maintain air within a predetermined space to the most proper state according to use and purpose thereof. In general, such an air conditioner includes a compressor, a condenser, an expansion device, and evaporator. Thus, the air conditioner has a refrigerant cycle in which compression, condensation, expansion, and evaporation processes of refrigerant are performed. Thus, the air conditioner may heat or cool a predetermined space.

The predetermined space may be variously provided according to a place at which the air conditioner is used. For example, when the air conditioner is disposed in a home or office, the predetermined space may be an indoor space of a house or building. On the other hand, when the air conditioner is disposed in a vehicle, the predetermined space may be a boarding space in which a person is boarded.

When the air conditioner performs a cooling operation, an outdoor heat-exchanger provided in an outdoor unit may serve as a condenser, and an indoor heat-exchanger provided in an indoor unit may serve as an evaporator. On the other hand, when the air conditioner performs a heating operation, the indoor heat-exchanger may serve as the condenser, and the outdoor heat-exchanger may serve as the evaporator.

For example, document WO 2013/146870 A1 discloses an air conditioning system comprising: an outdoor unit configured to be disposed in an outdoor space, the outdoor unit comprising a compressor and an outdoor heat exchanger; a plurality of indoor units configured to be disposed in an indoor space, each of the plurality of indoor units comprising an indoor heat exchanger and an expansion device; and a distribution unit configured to distribute and introduce a refrigerant into the plurality of indoor units, the distribution unit including a plurality of distribution tubes configured to guide introduction of the refrigerant into the plurality of indoor units and discharge of the refrigerant passing through the plurality of indoor units, wherein the outdoor unit comprises: an outdoor branch part branched into a plurality of refrigerant paths; a first outdoor tube extending from the outdoor branch part to guide the refrigerant to a first heat exchange part of the outdoor heat exchanger; a first outdoor expansion device provided in the first outdoor tube to adjust a flow of the refrigerant; a second outdoor tube extending from the outdoor branch part to guide the refrigerant to a second heat exchange part of the outdoor heat exchanger; a second outdoor expansion device provided in the second outdoor tube to adjust a flow of the refrigerant;wherein the air conditioning system further comprises a gas/liquid separation unit separably coupled to the outdoor unit; two tubes connecting the outdoor unit to the gas/liquid separation unit; and three tubes connecting the gas/liquid separation unit to the distribution unit, wherein the gas/liquid separation unit comprises: a gas/liquid separator to separate the refrigerant discharged from the outdoor unit into a gaseous refrigerant and a liquid refrigerant; a supercooler disposed at an outlet-side of the gas/liquid separator and in which the liquid refrigerant separated in the gas/liquid separator and a branched refrigerant in which at least one portion of the liquid refrigerant in a supercooling passage is branched are heat-exchanged with each other; a supercooling outlet tube disposed on an outlet-side of the super-cooler; the plurality of distribution tubes includes a first distribution tube through which the gaseous refrigerant separated in the gas/liquid separator flows via one of said three tubes, a second distribution tube connected to another of said three tubes which is connected to a tube connection part towards the gas/liquid separation combination part, and a third distribution tube connected to the supercooling outlet tube via the remaining tube of said three tubes, the first distribution tube comprising: a first distribution valve configured to control a flow rate of the refrigerant, and the second distribution tube comprises a second distribution valve configured to control a flow rate of the refrigerant.

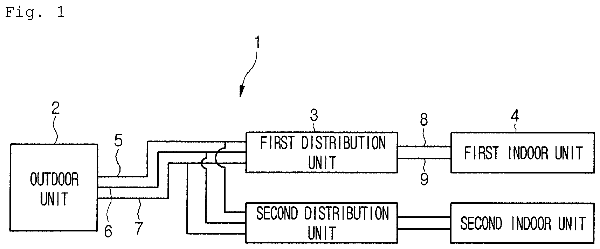

Fig. 1 is a view of an air conditioning system according to a related art, which is not according to the invention.

Referring to Fig. 1, an air conditioning system 1 includes an outdoor unit 2 in which a compressor and an outdoor heat exchanger are provided, a plurality of distribution units 3 connected to the outdoor unit 1, and a plurality of indoor units 4 respectively connected to the plurality of distribution units 3 and in which indoor heat exchangers are respectively provided. The air conditioning system 1 may be performed in a simultaneous operation mode in which cooling and heating operations are simultaneously performed.

As illustrated in Fig. 1, the plurality of distribution units 3 may include a first distribution unit and a second distribution unit. The plurality of indoor units 4 may include a first indoor unit and a second indoor unit. The first distribution unit may be connected to the first indoor unit, and the second distribution unit may be connected to the second indoor unit.

The plurality of distribution units 3 may be units for distributing refrigerant discharged from the outdoor unit 2 into the plurality of indoor units 4. The plurality of distribution units 3 may be connected to the outdoor unit 1 and the plurality of indoor units 4 through tubes.

In detail, the outdoor unit 2 and the distribution units 3 may be connected to each other through three tubes. The three tubes may include a low-pressure gas tube 5, a liquid tube 6, and a high-pressure gas tube 7.

The low-pressure gas tube 5 may be a tube through which the refrigerant flows until the refrigerant is introduced into the compressor after being evaporated in an evaporator in a refrigeration cycle. The liquid tube 6 may be a tube through which the refrigerant flows after being condensed in a condenser. The high-pressure gas tube 7 may be a tube through which the refrigerant flows until the refrigerant is introduced into the condenser after being compressed in the compressor. Also, the three tubes may be branched and connected to the first distribution unit and the second distribution unit.

One distribution unit of the plurality of distribution units 3 and one indoor unit 4 of the plurality of indoor units 4 may be connected to each other through two tubes. The two tubes may include a gas tube 8 through which a gaseous refrigerant flows and a liquid tube through which a liquid refrigerant flows.

That is, in the air conditioning system according to the related art, the outdoor unit 2 and the distribution units 3 may be connected to each other through the three tubes, and the distribution units 3 and the indoor units 4 may be connected to the two tubes.

As described above, when the outdoor unit 2 and the distribution units 3 are connected to each other through the three tubes, the outdoor unit 2 and the distribution units 3 may be complicated in installation and assembly. In addition, since the number of welding portions for connecting the tubes and the outdoor unit (or the distribution units) increases, installation reliability may be deteriorated.

When the refrigeration cycle is performed in a state where the indoor units includes heating indoor units and a cooling indoor units, i.e., in case of a main heating operational simultaneous operation in which a heating operation is mainly performed by using the heating indoor units, and a cooling operation is performed by using a portion of the cooling indoor units, a pressure loss in the outdoor unit may occur to deteriorate simultaneous operation performance.

In detail, the refrigerant evaporated in the cooling indoor unit and the refrigerant condensed in the heating indoor unit may be mixed with each other to generate a two-phase refrigerant. The two-phase refrigerant may flow into the outdoor heat exchanger through the liquid tube. Here, a pressure loss may occur in an expansion device to reduce a pressure, thereby deteriorating the operation performance.

### SUMMARY

The invention is specified by the independent claim. Preferred embodiments are defined in the dependent claims. Embodiments provide an air conditioning system in which a pressure loss is capable of being reduced.

According to the invention, an air conditioning system is provided as defined in claim 1.

Preferably, the air conditioning system further comprises an outdoor gas/liquid separator provided in an inlet-side of the compressor to separate a gaseous refrigerant from the refrigerant, wherein the refrigerants flowing into the first outdoor tube, the second outdoor tube, and the bypass tube are mixed with each other and is introduced into the outdoor gas/liquid separator.

Preferably, the air conditioning system further comprises a discharge temperature sensor detecting a discharge temperature of the refrigerant in the compressor, wherein an opening degree of the bypass valve device is adjusted on the basis of information detected by the discharge temperature sensor.

Preferably, the air conditioning system further comprises a controller configured to control the bypass valve device to increase in opening degree of the bypass valve device when the discharge temperature or discharge overheating degree of the refrigerant, which is detected by the discharge temperature sensor, is above a preset range, wherein the controller is configured to control the bypass valve device to decrease in opening degree of the bypass valve device when the discharge temperature or discharge overheating degree of the refrigerant is below the preset range.

Preferably, the air conditioning system further comprises: a variable passage extending from the first heat exchange part to the second heat exchange part of the outdoor heat exchanger; and a variable valve disposed on the variable passage to selectively block a flow of the refrigerant flowing into the variable passage.

The outdoor unit and the gas/liquid separation unit are separably connected to each other through the two tubes, and the gas/liquid separation unit and the distribution unit are separably connected to each other through the three tubes.

In another example not covered by the claims, a method of controlling an air conditioning system includes: drive a compressor disposed in an outdoor unit to perform a main heating operational simultaneous operation in which a portion of the plurality of indoor units performs a heating operation, and the rest portion of the plurality of indoor units performs a cooling operation; opening an outdoor expansion device disposed in an outdoor tube to introduce a two-phase refrigerant, which is introduced into the outdoor unit, into an outdoor heat exchanger; and opening a bypass valve device disposed in a bypass tube to bypass at least one portion of the two-phase refrigerant to be introduced into the outdoor heat exchanger, wherein the outdoor tube and the bypass tube are branched from the outdoor branch part to extend.

The air conditioning system may further include a discharge temperature sensor detecting a refrigerant discharge temperature of the compressor, wherein the method of controlling the air conditioning system may further include determining whether the refrigerant discharge temperature or discharge overheating degree is above a preset range on the basis of information detected by the discharge temperature sensor.

The refrigerant discharge temperature or discharge overheating degree is above the preset range, the bypass valve device may increase in opening degree, and when the refrigerant discharge temperature or discharge overheating degree is below the preset range, the bypass valve device may decrease in opening degree.

The outdoor tube includes a first outdoor tube connected to a first heat exchange part of the outdoor heat exchanger and a second outdoor tube connected to a second heat exchange part of the outdoor heat exchanger, and the air conditioning system may further include a variable passage connecting the first heat exchange part to the second heat exchange part.

The air conditioning system further includes a flow rate adjustment part through which at least one portion of the refrigerant passing through the indoor unit that performs the heating operation passes, wherein the rest portion of the refrigerant passing through the indoor unit may be introduced into the indoor unit that performs the cooling operation, and the method of controlling the air conditioning system may further include adjusting an amount of refrigerant to be introduced into the indoor unit that performs the cooling operation.

The details of one or more embodiments are set forth in the accompanying drawings and the description below.

### BRIEF DESCRIPTION OF THE DRAWINGS

Fig. 1 is a view of an air conditioning system according to a related art, which is not according to the invention.
Fig. 2 is a view of an air conditioning system according to an embodiment of the invention.
Fig. 3 is a cycle view illustrating detailed constitutions of the air conditioning system according to an embodiment of the invention.
Fig. 4 is a view illustrating a flow of refrigerant during an exclusive heating operation in the air conditioning system according to an embodiment of the invention.
Fig. 5 is a view illustrating a flow of refrigerant when a cooling operation additionally operates during a heating operation in the air conditioning system according to an embodiment of the invention.
Fig. 6 is a block diagram of the air conditioning system according to an embodiment of the invention.
Fig. 7 is a flowchart illustrating a method of controlling the air conditioning system according to an example not forming part of the invention as claimed.
Figs. 8 and 9 are views illustrating a process of controlling a bypass valve device when the cooling operation additionally operates during the heating operation in the air conditioning system according to an example not forming part of the invention as claimed.

### DETAILED DESCRIPTION OF THE EMBODIMENTS

Hereinafter, exemplary embodiments will be described with reference to the accompanying drawings. The invention may, however, be embodied in many different forms and should not be construed as being limited to the embodiments set forth herein. The invention is merely limited by the subject-matter of the claims.

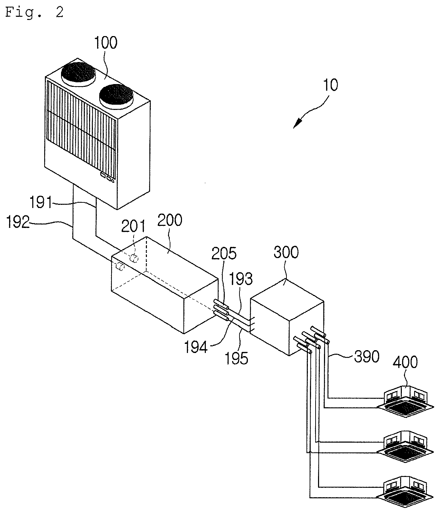

Fig. 2 is a view of an air conditioning system according to an embodiment.

Referring to Fig. 2, an air conditioning system 10 according to an embodiment includes an outdoor unit 100, a gas/liquid separation unit 200, a distribution unit 300, and a plurality of indoor units 400.

In detail, the gas/liquid separation unit 200 is separably coupled to the outdoor unit 100. The air conditioning system 10 includes two tubes 191 and 192 connecting the outdoor unit 100 to the gas/liquid separation unit 200. The two tubes 191 and 192 include a first connection tube 191 and a second connection tube 192, which are disposed on a side of the gas/liquid separation unit 200.

For example, the first connection tube 191 may include a gas tube through which a gaseous refrigerant compressed in a refrigeration cycle flows. Also, the second connection tube 192 may include a liquid tube through which a liquid refrigerant condensed in the refrigeration cycle flows.

Also, a first tube connection part 201 separably coupled to the first and second connection tubes 191 and 192 is provided in the gas/liquid separation unit 200. That is, the gas/liquid separation unit 200 includes two first tube connection parts 201.

The air conditioning system 10 includes three tubes 193, 194, and 195 connecting the gas/liquid separation unit 200 to the distribution unit 300. The three tubes 193, 194, and 195 may include a third connection tube 193, a fourth connection tube 194, and a fifth connection tube 195, which are connected to the other side of the gas/liquid separation unit 200.

Also, a second tube connection part 205 separably coupled to the third to fifth connection tubes 193 to 195 is provided in the gas/liquid separation unit 200. That is, the gas/liquid separation unit 200 includes three second tube connection parts 205.

The air conditioning system 10 includes a plurality of distribution tubes 390 connecting the distribution units 300 to the plurality of indoor units 400. The distribution tubes connecting the distribution units 300 to one indoor unit 400 may include an inflow tube guiding introduction of the refrigerant into the one indoor unit 400 and a discharge tube guiding discharge of the refrigerant into the one indoor unit 400.

Hereinafter, detailed constitutions of the air conditioning system 10 will be described.

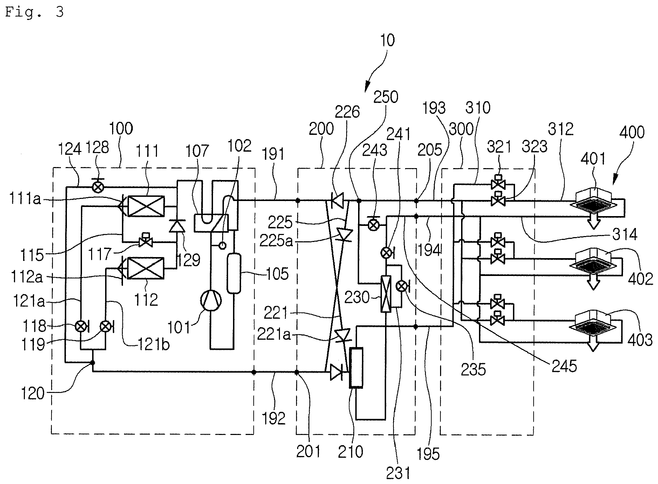

Fig. 3 is a cycle view illustrating detailed constitutions of the air conditioning system according to an embodiment.

Referring to Fig. 3, the air conditioning system 10 according to an embodiment includes an outdoor unit 100 disposed in an outdoor space, a gas/liquid separation unit 200 connected to the outdoor unit 100, a distribution unit 300 connected to the gas/liquid separation unit 200 to distribute refrigerant, and a plurality of indoor units 400 in which the refrigerant distributed by the distribution unit 300 is introduced and heat-exchanged. The plurality of indoor units 400 include a first indoor unit 401, a second indoor unit 402, and a third indoor unit 403.

Although not shown, each of the indoor units 400 includes an indoor heat exchanger which heat-exchanged with indoor air and an expansion device (hereinafter, referred to as an indoor expansion device) for expanding the refrigerant introduced into the indoor heat exchanger.

The outdoor unit 100 includes a compressor 101 and an outdoor gas/liquid separator 105 disposed on an inlet-side of the compressor 101 to separate a liquid refrigerant and a gaseous refrigerant of the refrigerant to be introduced into the compressor 101 from each other. The gaseous refrigerant separated by the outdoor gas/liquid separator 105 may be introduced into the compressor 101.

The outdoor unit 100 includes a passage switching part 107 guiding the refrigerant compressed in the compressor 101 toward the outdoor heat exchangers 111 and 112 or the gas/liquid separation unit 200. The passage switching part 107 may include a four-way valve.

When the air conditioning system 10 performs a cooling operation, the refrigerant may be introduced into the outdoor heat exchangers 111 and 112 from the passage switching part 107. On the other hand, when the air conditioning system performs a heating operation, the refrigerant may be introduced into the gas/liquid separation unit 200 from the passage switching part 107.

The outdoor heat exchangers 111 and 112 include a plurality of heat exchange parts. The plurality of heat exchange parts may include a first heat exchange part 111 and a second heat exchange part 112, which are connected in parallel to each other. The first and second heat exchange parts 111 and 112 may be connected to tubes that are branched from an outlet-side tube of the passage switching part 107.

A check valve 129 is disposed on a side of the first and second heat exchange parts 111 and 112. The check valve 129 may be provided in a branch tube extending from the passage switching part 107 to the second heat exchanger 112. The refrigerant passing through the passage switching part 107 may not be introduced into the second heat exchange part 112, but be introduced into the first heat exchange part 111 by the check valve 129.

The first heat exchange part 111 may include a first capillary 111a for decompressing the refrigerant during the heat operation. Also, the second heat exchange part 112 may include a second capillary 112a.

Also, in the cooling operation, the outdoor unit 100 includes a variable passage 115 guiding a flow of the refrigerant from an outlet-side of the first heat exchange part 111 to an inlet-side of the second heat exchange part 112 and a variable valve 117 provided in the variable passage 115 to selectively block the flow of the refrigerant.

The variable valve 117 may include a solenoid valve that is controllable to turn on/off. The refrigerant passing through the first heat exchange part 111 may be selectively introduced into the second heat exchange 112 according to the on/off of the variable valve 117.

In detail, when the variable valve 117 is turned on or opened, the refrigerant passing through the first heat exchange part 111 may be introduced into the second heat exchange part 112 via the variable passage 115. Then, the refrigerant may pass through the second heat exchange part 112 to flow into a second outdoor tube 121b. On the other hand, when the variable valve 117 is turned off or closed, the refrigerant may pass through the first heat exchange part 111 to flow into a first outdoor tube 121a. The first and second outdoor tubes 121a and 121b may be called an "outdoor tube". Also, the outdoor tube may be understood as an outlet-side tube of the first and second heat exchange parts 111 and 112.

The outdoor unit 100 includes the first outdoor tube 121a extending from the outlet-side of the first heat exchange part 111 and a first outdoor expansion device 118 that is provided in the first outdoor tube 121a to adjust a flow of the refrigerant.

Also, the outdoor unit 100 includes the second outdoor tube 121b extending from the outlet-side of the second heat exchange part 112 and a second outdoor expansion device 119 that is provided in the second outdoor tube 121b to adjust a flow of the refrigerant.

When the first outdoor expansion device 118 is opened or increases in opening degree, an amount of refrigerant flowing into the first heat exchange part 111 and the first outdoor tube 121a may increase. Also, when the second outdoor expansion device 119 is opened or increase in opening degree, an amount of refrigerant flowing into the second heat exchange part 112 and the second outdoor tube 121b may increase.

The first and second outdoor expansion devices 118 and 119 may be connected in parallel to each other. Also, the first or second outdoor expansion device 118 or 119 may include an electronic expansion valve (EEV). When the heating operation is performed, the first and second outdoor expansion devices 118 and 119 may expand the refrigerant to be introduced into the outdoor heat exchangers 111 and 112.

The outdoor unit 100 includes an outdoor combination part 120 in which the refrigerant passing through the first and second outdoor expansion devices 118 and 119 are mixed with each other. The refrigerant mixed in the outdoor combination part 120 may be discharged from the outdoor unit 100 and then be introduced into the gas/liquid separation unit 200. The outdoor combination part 120 may allow the refrigerant to be branched into the first or second outdoor tube 121a or 121b when the heating operation is performed. Thus, the outdoor combination part 120 may be called an "outdoor branch part".

The outdoor unit 100 includes a bypass tube 124 for bypassing at least one portion of the refrigerant flowing to the first or second outdoor tube 121a or 121b.

The bypass tube 124 may extend from the outdoor combination part 120 and then be connected to a tube (hereinafter, referred to as a passage switching tube) connecting the first outdoor heat exchange part 111 to the passage switching part 107. Here, the passage switching tube may be understood as an outlet-side tube of the compressor 101.

That is, the bypass tube 124 may have one end connected to the outdoor combination part 120 and the other end connected to the passage switching tube.

A bypass valve device 128 for adjusting a flow rate of the refrigerant is disposed in the bypass tube 124. The bypass valve device 128 may include an electronic expansion valve (EEV) of which an opening degree is adjustable.

For example, when the heating operation is mainly performed, and the cooling operation is simultaneously performed (a main heating operational cooling operation), at least one portion of the refrigerant flowing into the second connection tube 192 may flow into the bypass tube 124 from the outdoor combination part 120 to flow into the passage switching tube. Here, the main heating operational simultaneous operation may represent an operation mode in which the number of indoor units for performing the heating operation among the plurality of indoor units is greater than that of indoor units for performing the cooling operation. Also, when the bypass valve device 128 increase in opening degree in a state where the bypass valve device 128 is opened, an amount of refrigerant flowing into the bypass tube 124 may increase.

For another example, when a main cooling operational heating operation is performed, at least one portion of the refrigerant to be introduced from the passage switching part 107 to the first outdoor heat exchange part 111 may bypass the first outdoor heat exchange part 111 to flow into the bypass tube 124. Also, the gaseous refrigerant flowing into the bypass tube 124 may be decompressed in the bypass valve device 128 to phasechange into a two-phase refrigerant.

The air conditioning system 10 includes first and second connection tubes 191 and 192 connecting the outdoor unit 100 to the gas/liquid separation unit 200. The first connection tube 191 may extend from the passage switching part 107 to the gas/liquid separation unit 200, and the second connection tube 192 may extend from the outdoor combination part 120 to the gas/liquid separation unit 200.

The gas/liquid separation unit 200 includes a first tube connection part 201 that is separably coupled to the first and second connection tubes 191 and 192. Thus, two first tube connection parts 201 may be provided.

The gas/liquid separation unit 200 includes bridge circuits 221 and 225 guiding the refrigerant introduced into the gas/liquid separation unit 200 through the first or second connection tube 191 or 192.

The bridge circuits 221 and 225 include a first bridge tube 221 and a second bridge tube 225.

The first bridge tube 221 may be coupled to the first connection tube 191 to guide the refrigerant flowing into the first connection tube 191 to the gas/liquid separator 210 when the heating operation is performed. Also, the second bridge tube 225 may be coupled to the second connection tube 192 to guide the refrigerant from the gas/liquid separation unit 200 to the second connection tube 192 and the outdoor unit 100 when the heating operation is performed.

The bridge circuits 221 and 225 include a first check valve 221a provided in the first bridge tube 221 and a second check valve 225a provided in the second bridge tube 225. The first and second check valves 221a and 225a guide the refrigerant in one direction in the tubes 221 and 225.

A third check valve 226 is disposed on a side of the bridge circuits 221 and 225. The third check valve 226 allows the refrigerant introduced into the gas/liquid separation unit 200 through the first connection tube 191 to be introduced into the first bridge tube 221 and also prevent the refrigerant from being discharged from the gas/liquid separation unit 200 through the third connection tube 193. The third check valve 226 is disposed in a tube connecting an end of the first bridge tube 221 to an end of the second bridge tube 225.

The gas/liquid separation unit 200 includes the gas/liquid separator 210 in which the refrigerant flowing into the first bridge tube 221 or the refrigerant mixed in the outdoor combination part 120 is introduced and then is separated into a gaseous refrigerant and a liquid refrigerant.

The gaseous refrigerant separated in the gas/liquid separator 210 may be introduced into the distribution unit 300, and the separated liquid refrigerant is introduced into a supercooler 230. The supercooler 230 is disposed on an outlet-side of the gas/liquid separator 210.

The supercooler 230 is understood as an intermediate heat exchanger in which a first refrigerant circulating into the system 10 and a portion (a second refrigerant) of the first refrigerant are branched and then heat-exchanged with each other.

The gas/liquid separation unit 200 includes a supercooling passage 231 in which the second refrigerant is branched. Also, a supercooling expansion device 235 for decompressing the second refrigerant is disposed in the supercooling passage 231. The supercooling expansion device 235 may include an electronic expansion valve (EEV) . The supercooling passage 231 extends to a gas/liquid separation combination part 250.

A supercooling outlet tube 245 and a first flow rate adjustment part 241 provided in the supercooling outlet tube 245 are disposed on an outlet-side of the supercooler 230. The first flow rate adjustment part 241 adjusts an amount of first refrigerant passing through the supercooler 230.

For example, when the first flow rate adjustment part 241 is opened, the first refrigerant is heat-exchanged in the supercooler 230. Then, the first refrigerant passing through the supercooler 230 is introduced into the distribution unit 300. On the other hand, when the first flow rate adjustment part 241 is closed, the first refrigerant is be heat-exchanged in the supercooler 230.

The gas/liquid separation unit 200 includes a second flow rate adjustment part 243 disposed in a tube that extends from one point of the supercooling outlet tube 245 to the supercooling passage 231 to adjust an amount of refrigerant that returns to the gas/liquid separation unit 200 after passing through the indoor unit 400 while the heating operation is performed.

Each of the first and second flow rate adjustment parts 241 and 243 may include an electronic expansion valve (EEV). Thus, a decompressed degree of the refrigerant passing through the first or second flow rate adjustment part 241 or 243 may be adjusted according to an opening degree of the first or second flow rate adjustment part 241 or 243.

A second tube connection part 205 is provided in the gas/liquid separation unit 200. A plurality of connection tubes connected to the distribution units 300 may be separably coupled to the second tube connection part 205. The plurality of connection tubes may include a third connection tube 193, a fourth connection tube 194, and a fifth connection tube 195. Thus, three second tube connection parts 205 may be provided.

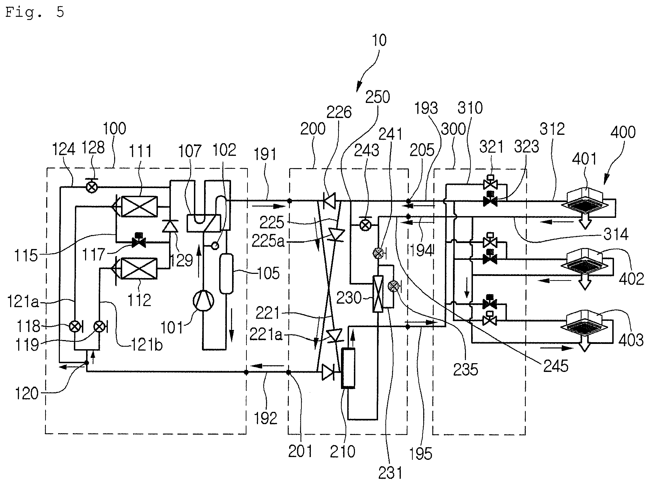

The gas/liquid separation unit 200 includes the gas/liquid separation combination part 250 in which the refrigerant is mixed with each other. For example, when the main heating operational cooling operation is performed, the refrigerant condensed in the first and second indoor units 401 and 402 to pass through the second flow rate adjustment part 243 and the refrigerant evaporated in the third indoor unit 403 may be mixed with each other in the gas/liquid separation combination part 250 (see Fig. 5).

For another example, when an exclusive cooling operation is performed, the second refrigerant passing through the supercooler 230 and the refrigerant evaporated in the first to third indoor units 401, 402, and 403 may be mixed with each other in the gas/liquid separation combination part 250.

The distribution unit 300 may distribute the refrigerant discharged from the gas/liquid separation unit 200 into the plurality of indoor units 400.

In detail, the distribution unit 300 includes a plurality of distribution tubes 310, 312, and 314 guiding the introduction of the refrigerant into one indoor unit 400 and the discharge of the refrigerant passing through the one indoor unit 400. The plurality of distribution tubes 310, 312, and 314 include a first distribution tube 310, a second distribution tube 312, and a third distribution tube 314.

The first distribution tube 310 is a tube through which the gaseous refrigerant separated in the gas/liquid separator 210 flows, the second distribution tube 312 is a tube connected to the third connection tube 193, and the third distribution tube 314 is a tube connected to the supercooling outlet tube 245.

Also, a first distribution valve 321 is provided in the first distribution tube 310 to control a flow rate of the refrigerant, and a second distribution valve 323 is provided in the second distribution tube 312 to control a flow rate of the refrigerant.

As illustrated in Fig. 3, the plurality of distribution tubes 310, 312, and 314 and the distribution valves 321 and 323 may be provided to correspond to each of the indoor units. Also, the plurality of distribution tubes 310, 312, and 314 provided in one indoor unit may be branched from the plurality of distribution tubes 310, 312, and 314 provided in the other indoor unit to extend.

The indoor heat exchanger and the indoor expansion device may be provided in the indoor unit 400. When the cooling operation is performed in one indoor unit, the refrigerant introduced into the one indoor unit may be decompressed in the indoor expansion device and then be evaporated in the indoor heat exchanger.

Hereinafter, an effect and refrigerant flow according to an operation mode of the air conditioning system according to an embodiment will be described.

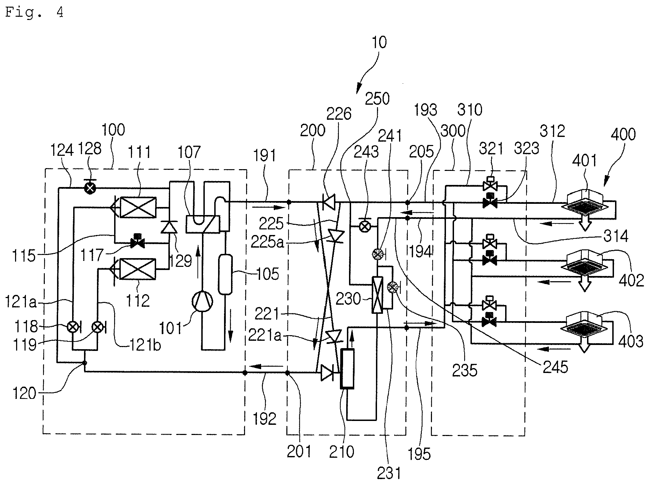

Fig. 4 is a view illustrating a flow of refrigerant during the exclusive heating operation in the air conditioning system according to an embodiment. An effect and refrigerant flow when the air conditioning system 10 performs the exclusive heating operation, i.e., when all of the indoor units perform the heating operation will be described with reference Fig. 4.

The refrigerant compressed in the compressor 101 may flow into the first connection tube 191 through the passage switching part 107 and then be introduced into the first bridge tube 221. Here, the flow of the refrigerant into the gas/liquid separation combination part 250 may be restricted by the third check valve 226. Thus, the refrigerant may be guided to the first bridge tube 221 and then be introduced into the gas/liquid separator 210.

The refrigerant introduced into the gas/liquid separator 210 may be a high-pressure gaseous refrigerant. The gaseous refrigerant separated in the gas/liquid separator 210 may be introduced into the distribution unit 300 through the fifth connection tube 195. The supercooling expansion part 235 and the first flow rate adjustment part 241 may be closed, and thus, the refrigerant may not be introduced into the supercooler 230.

The refrigerant introduced into the distribution unit 300 may be branched to flow into the first distribution tube 310 corresponding to each of the indoor units 400 and then be introduced into the indoor unit 400 and condensed. Here, the first distribution valve 321 may be opened, and the second distribution valve 323 may be closed. As a result, the heating operation may be performed through the plurality of indoor units 400.

Also, the refrigerant condensed in the indoor unit 400 may be discharged from the indoor unit 400 to flow into the third distribution tube 314.

The refrigerant flowing into the third distribution tube 314 corresponding to each of the indoor units 400 may be mixed with each other to pass through the second flow rate adjustment part 243 through the fourth connection tube 194. Here, the second flow rate adjustment part 243 may be fully opened, and thus, the refrigerant may not be decompressed.

The refrigerant passing through the second flow rate adjustment part 243 may flow into the second bridge tube 225. Here, since the refrigerant flowing into the first bridge tube 221 has a pressure greater than that of the refrigerant passing through the second flow rate adjustment part 243, the refrigerant may not pass through the third check valve 226, but may flow into the second bridge tube 225. Also, the refrigerant passing through the second bridge tube 225 may be introduced into the outdoor unit 100 through the second connection tube 192.

The refrigerant introduced into the outdoor unit 100 may be branched in the outdoor branch part 120 to pass through the first outdoor tube 121a and the second outdoor tube 121b and then be evaporated in the first and second heat exchange parts 111 and 112.

Here, the refrigerant may be decompressed in the first and second outdoor expansion devices 118 and 119. Also, the bypass valve device 128 may be closed to restrict a flow of the refrigerant from the outdoor branch part 120 to the bypass tube 124.

Also, the variable valve 117 may be closed. Thus, the refrigerant introduced into the second heat exchange part 112 may not be introduced into the first heat exchange part 111, but may be mixed with the refrigerant discharged from the first heat exchange part 111.

The refrigerant passing through the outdoor heat exchangers 111 and 112 may be introduced into the compressor 101 through the passage switching part 107. This refrigerant cycle may be repeatedly performed.

Fig. 5 is a view illustrating a flow of refrigerant when the cooling operation additionally operates during the heating operation in the air conditioning system according to an embodiment. An effect and refrigerant flow when air conditioning system 10 mainly performs the heating operation, and a portion of the indoor units performs the cooling operation (main heating operational cooling operation) will now be described with reference to Fig. 5.

Here, the term "main heating operational cooling operation" may be understood as an operation mode in which the number of indoor units for performing the heating operation is grater than that of indoor units for performing the cooling operation.

The refrigerant compressed in the compressor 101 may flow into the first connection tube 191 through the passage switching part 107 and then be introduced into the first bridge tube 221. Here, the refrigerant may not flow into the gas/liquid separation combination part 250 by the third check valve 226, but may be guided to the first bridge tube 221 and then be introduced into the gas/liquid separator 210.

The refrigerant introduced into the gas/liquid separator 210 may be a high-pressure gaseous refrigerant. The gaseous refrigerant separated in the gas/liquid separator 210 may be introduced into the distribution unit 300 through the fifth connection tube 195. The supercooling expansion part 235 and the first flow rate adjustment part 241 may be closed, and thus, the refrigerant may not be introduced into the supercooler 230.

The refrigerant introduced into the distribution unit 300 may flow into the first distribution tube 310 corresponding to the first and second indoor units 401 and 402 and then be condensed in the first and second indoor units 401 and 402. Thus, the heating operation may be performed through the first and second indoor units 401 and 402.

Also, at least one portion of the refrigerant condensed in the first and second indoor units 401 and 402 may be mixed with each other to flow into the third indoor unit 403. The refrigerant introduced into the third indoor unit 403 may be decompressed while passing through the indoor expansion device and then be evaporated in the indoor heat exchanger. Thus, the cooling operation may be performed through the third indoor unit 403.

Also, the refrigerant evaporated in the third indoor unit 403 may be discharged from the third indoor unit 403 to flow into the second distribution tube 312. Then, the refrigerant may be introduced into the gas/liquid separation unit 200 via the third connection tube 193.

The refrigerant except for the refrigerant condensed in the first and second indoor units 410 and 402 may pass through the second flow rate adjustment part 243 via the fourth connection tube 194. The second flow rate adjustment part 243 may be disposed on an outlet-side of the first and second indoor units 401 And 402.

The refrigerant may be decompressed according to the opening degree of the second flow rate adjustment part 243 while passing through the second flow rate adjustment part 243. For example, the more the opening degree of the second flow rate adjustment part 243 decreases, the more the decompression effect may increase.

Also, the opening degree of the second flow rate adjustment part 243 may be adjusted according to an amount of refrigerant to be introduced into the third indoor unit 403.

For example, if the opening degree of the second flow rate adjustment part 243 decreases, an amount of refrigerant introduced into the third indoor unit 403 may increase when compared to that of refrigerant introduced into the second flow rate adjustment part 243. Also, in aspect of reliability in the refrigeration cycle, a low pressure (an evaporation pressure) may decrease.

On the other hand, if the opening degree of the second flow rate adjustment part 243 increases, an amount of refrigerant introduced into the third indoor unit 403 may decrease when compared to that of refrigerant introduced into the second flow rate adjustment part 243. Also, in aspect of reliability in the refrigeration cycle, the low pressure (the evaporation pressure) may increase.

Thus, the opening degree of the second flow rate adjustment part 243 may be controlled to a proper level in consideration of cooling performance of the third indoor unit 403 and reliability of the refrigeration cycle.

The refrigerant decompressed in the second flow rate adjustment part 243 may be evaporated in the third indoor unit 403 and then be mixed with the refrigerant introduced into the gas/liquid separation unit 200 via the third connection tube 193 in the gas/liquid separation combination part 250.

Also, the mixed refrigerant may be introduced into the outdoor unit 100 through the second bridge tube 225. Here, the mixed refrigerant may be a two-phase refrigerant in which the gaseous refrigerant and the liquid refrigerant are mixed with each other.

The refrigerant introduced into the outdoor unit 100 may be branched in the outdoor branch part 120 to pass through the first outdoor tube 121a and the second outdoor tube 121b and then be evaporated in the first and second heat exchange parts 111 and 112.

Here, the variable valve 117 may be closed. Thus, the refrigerant introduced into the second heat exchange part 112 may not be introduced into the first heat exchange part 111, but may be mixed with the refrigerant discharged from the first heat exchange part 111. Also, the evaporated refrigerant may be introduced into the compressor 101 via the passage switching part 107.

The bypass valve device 128 may be opened. The two-phase refrigerant may pass through the first outdoor expansion device 118 and the first capillary 111a while flowing into the first outdoor tube 121a. Here, a press loss may occur. Particularly, a pressure loss due to the gaseous refrigerant of the two-phase refrigerant may be relatively high.

If the pressure loss is too high, the low pressure may be reduced to deteriorate the operation performance. Thus, in the current embodiment, at least one portion of the refrigerant to be introduced into the first or second outdoor tube 121a or 121b may be bypassed into the bypass tube 124.

The bypass valve device 128 may be opened to a preset opening degree. Thus, at least one portion of the refrigerant flowing into the second connection tube 192 may flow into the bypass tube 124 from the outdoor branch part 120.

As described above, since the bypass tube 124 as well as the first and second outdoor tubes 121a and 121b is opened, a flow space of the refrigerant may be secured to reduce the pressure loss.

The refrigerant flowing into the bypass tube 124 may be introduced into the passage switching part 107 via the passage switching tube and then be introduced into the compressor 101 via the outdoor gas/liquid separator 105.

Hereinafter, a flow of the refrigerant when the cooling operation is performed will be described with reference to Fig. 3.

An effect and refrigerant flow when the air conditioning system 10 performs the exclusive cooling operation, i.e., all of the indoor units perform the cooling operation will now be described.

The refrigerant compressed in the compressor 101 may be introduced into the first outdoor heat exchange part 111 through the passage switching part 107 and then be condensed. Also, the variable valve 117 may be opened. Thus, a portion of the refrigerant passing through the first outdoor heat exchange part 111 may flow into the first outdoor tube 121a, and the rest portion may be introduced into the second outdoor heat exchange part 112 via the variable valve 117 and then be condensed.

The refrigerant flowing into the first outdoor tube 121a may pass through the first outdoor expansion device 118, and the refrigerant discharged from the second outdoor heat exchange part 112 may flow into the second outdoor tube 121b to pass through the second outdoor expansion device 119. The bypass valve device 128 may be closed to restrict a flow of the refrigerant.

As described above, in case of the exclusive cooling operation, the variable valve 117 may be opened to allow the refrigerant to successively pass through the plurality of heat exchange parts 111 and 112, thereby being condensed. However, if the desired cooling performance is low, the variable valve 117 may be closed to allow the refrigerant to pass through only the first heat exchange part 111.

The refrigerant discharged from the outdoor unit 100 may flow into the second connection tube 192 and then be introduced into the gas/liquid separator 210.

The refrigerant introduced into the gas/liquid separator 210 may be a condensed refrigerant, and all or most of the refrigerant may be in a liquid refrigerant. The liquid refrigerant separated in the gas/liquid separator 210 may pass through the supercooler 230 and the first flow rate adjustment part 241 and then be introduced into the distribution unit 300 through the fourth connection tube 194.

Here, the supercooling expansion part 235 and the first flow rate adjustment part 241 may be opened to allow the first and second refrigerant to heat-exchanged with each other in the supercooler 230. Also, a cooling degree of the first refrigerant and a heating degree of the second refrigerant in the supercooler 230 may be controlled according to the opening degree of the supercooling expansion part 235.

The refrigerant passing through the supercooler 230, i.e., the first refrigerant may be introduced into the third distribution tube 314 through the fourth connection tube 194 and then be evaporated in the indoor unit 400. In the current embodiment, when the plurality of indoor units 400 are provided, the refrigerant may be branched into the third distribution tube 314 corresponding to each of the indoor units 400 and then be introduced into the indoor units 400.

Also, the refrigerant evaporated in the plurality of indoor units 400 may flow into the second distribution tube 312 and then be mixed with each other. Then, the refrigerant may be introduced into the gas/liquid separation unit 200 through the third connection tube 193.

The refrigerant evaporated in the indoor unit 400 may be mixed with the second refrigerant passing through the supercooler 230 in the gas/liquid separation combination part 250. Then, the mixed refrigerant may be introduced into the outdoor unit 100 through the first connection tube 191 and be compressed in the compressor 101. This refrigerant cycle may be repeatedly performed.

The first distribution valve 321 may be closed to restrict a flow of the refrigerant from the gas/liquid separator 210 to the first distribution tube 310.

Next, an effect and refrigerant flow when the heating operation is additionally performed during the cooling operation, i.e., when the cooling operation is mainly performed, and a portion of the indoor units performs the heating operation (the main cooling operational heating operation) will be simply described. Here, the term "main cooling operational heating operation" may be understood as an operation mode in which the number of indoor units for performing the cooling operation is grater than that of indoor units for performing the heating operation.

The refrigerant compressed in the compressor 101 may be branched into the first outdoor heat exchange part 111 and the bypass tube 124 through the passage switching part 107 to flow. Here, the bypass valve device 128 and the variable valve 117 may be opened.

Thus, a portion of the refrigerant passing through the first outdoor heat exchange part 111 may be introduced into the first outdoor expansion device 118 through the first outdoor tube 121a. Also, the other portion of the refrigerant may be introduced into the second outdoor heat exchange part 112 via the variable valve 117 and be condensed. Then, the refrigerant may be introduced into the second outdoor expansion device 119.

As described above, a portion of the refrigerant compressed in the compressor 101 may flow through the bypass valve device 128, and the other portion of the refrigerant may pass through the outdoor heat exchanger 111 and 112. Thus, the refrigerant discharged from the outdoor unit 110 may have a two-phase state having a pressure greater than a preset high pressure.

An opening degree of the bypass valve device 128 may be adjusted according to an amount of refrigerant introduced into the first indoor unit 401 that performs the heating operation. Here, whether an amount of refrigerant introduced into the first indoor unit 401 is lack may be determined on the basis of a high pressure (a condensation pressure) of the refrigeration cycle. If an amount of refrigerant in the first indoor unit 401 is lack, the high pressure may decrease.

For example, if the refrigerant introduced into the first indoor unit 401 is sufficient, an opening degree of the bypass valve device 128 may decrease. On the other hand, if the refrigerant introduced into the first indoor unit 401 is insufficient, an opening degree of the bypass valve device 128 may increase to control an amount of refrigerant so that a more amount of high-pressure gaseous refrigerant is introduced into the first indoor unit 401.

The refrigerant discharged from the outdoor unit 100 may be the two-phase refrigerant. The two-phase refrigerant may be introduced into the gas/liquid separator 210 through the second connection tube 192.

The gaseous refrigerant separated in the gas/liquid separator 210 may flow into the first distribution tube 310 corresponding to the first indoor unit 410 through the fifth connection tube 195. Then, the refrigerant may be introduced into the first indoor unit and be condensed. Thus, the first indoor unit 401 may perform the heating operation.

The refrigerant condensed in the first indoor unit 401 may be branched into the second and third indoor units 402 and 403 through the third distribution tube 314 to flow. The refrigerant introduced into the second and third indoor units 402 and 403 may be expanded in the indoor expansion device and evaporated in the indoor heat exchanger to perform the cooling operation.

The refrigerant evaporated in the second and third indoor units 402 and 403 may be mixed with each other and then be introduced into the gas/liquid separation unit 200 through the third connection tube 193.

The liquid refrigerant separated in the gas/liquid separator 210 may selectively pass through the supercooler 230. In detail, the first flow rate adjustment part 241 may be adjusted in opening degree according to whether an amount of refrigerant to be introduced into the second and third indoor units 402 and 403 is lack. For example, if an amount of refrigerant to be introduced into the second and third indoor units 402 and 403 is lack, the low pressure may increase.

If an amount of refrigerant to be introduced into the second and third indoor units 402 and 403 is lack, an opening degree of the first flow rate may increase. Thus, an amount of refrigerant introduced into the second and third indoor units 402 and 403 from the first flow rate adjustment part 241 may increase.

Here, the refrigerant passing through the first flow rate adjustment part 241 may be mixed with the refrigerant passing through the first indoor unit 401 and then be introduced into the second and third indoor units 402 and 403.

On the other hand, if an amount of refrigerant to be introduced into the second and third indoor units 402 and 403 is sufficient, an opening degree of the first flow rate adjustment part 241 may decrease or be closed. Thus, an amount of refrigerant introduced into the second and third indoor units 402 and 403 from the first flow rate adjustment part 241 may decrease.

When the first flow rate adjustment part 241 is opened, a supercooling degree of the first refrigerant or an overheating degree of the second refrigerant may be controlled according to an opening degree of the supercooling expansion part 235.

The refrigerant evaporated in the second and third indoor units 402 and 403 and the second refrigerant passing through the supercooler 230 may be mixed with each other in the gas/liquid combination part 250. The mixed refrigerant may be introduced into the outdoor unit 100 through the first connection tube 191. Here, since the refrigerant flowing into the second connection tube 192 has a pressure greater than that of the refrigerant mixed in the gas/liquid separation combination part 250, a flow of the mixed refrigerant into the first or second bridge tube 221 or 225 may be restricted to flow into the first connection tube 191.

The refrigerant introduced into the outdoor unit 100 may be compressed in the compressor 101 via the passage switching part 107. This refrigeration cycle may be repeatedly performed.

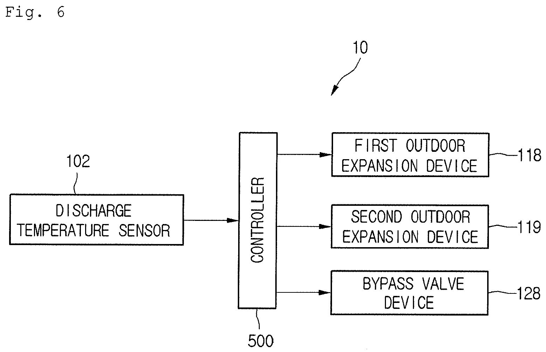

Fig. 6 is a block diagram of the air conditioning system according to an embodiment.

Referring to Fig. 6, the air conditioning system 10 according to an embodiment includes a discharge temperature sensor 101 detecting a discharge temperature of the refrigerant in the compressor 101 and a controller 500 controlling an operation of the bypass valve device 128 on the basis of information with respect to the discharge temperature or discharge overheating degree of the refrigerant in the compressor 101, which is detected by the discharge temperature sensor 101.

The discharge overheating degree may be calculated through a difference between the discharge temperature detected by the discharge temperature sensor 101 and an ideal discharge temperature. The ideal discharge temperature may be previously set.

The discharge temperature or discharge overheating degree may be reference factors for determining whether the refrigerant in the system is lack, i.e., the gaseous refrigerant suctioned into the compressor 101 is sufficient or insufficient.

For example, if the discharge temperature or discharge overheating degree is low, it may be determined that the gaseous refrigerant suctioned into the compressor 101 is lack. That is, it may be understood that a large amount of liquid refrigerant is introduced into the outdoor gas/liquid separator 105, and a relatively small amount of gaseous refrigerant that is separated from the liquid refrigerant in the compressor 101 is suctioned.

On the other hand, if the discharge temperature or discharge overheating degree is high, it may be determined that an amount of the gaseous refrigerant suctioned into the compressor 101 is excessive. That is, it may be understood that a small amount of liquid refrigerant is introduced into the outdoor gas/liquid separator 105, and a relatively large amount of gaseous refrigerant that is separated from the liquid refrigerant in the compressor 101 is suctioned.

Thus, if the discharge temperature or discharge overheating degree is low, an opening degree of the bypass valve device 128 may decrease to reduce an amount of two-phase refrigerant flowing into the bypass tube 124. In this case, since a relatively large amount of refrigerant is evaporated through the first and second heat exchange parts 111 and 112, an amount of two-phase refrigerant introduced into the outdoor gas/liquid separator 105, i.e., an amount of liquid refrigerant may be reduced to suction a relatively large amount of gaseous refrigerant into the compressor 101.

On the other hand, if the discharge temperature or discharge overheating degree is high, an opening degree of the bypass valve device 128 may increase to increase an amount of two-phase refrigerant flowing into the bypass tube 124. In this case, since a relatively small amount of refrigerant is evaporated through the first and second heat exchange parts 111 and 112, an amount of two-phase refrigerant introduced into the outdoor gas/liquid separator 105, i.e., an amount of liquid refrigerant may increase to suction a relatively small amount of gaseous refrigerant into the compressor 101.

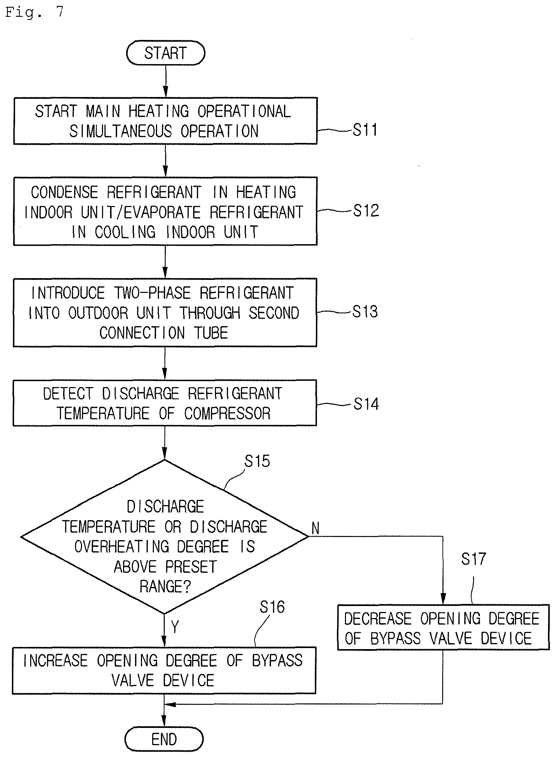

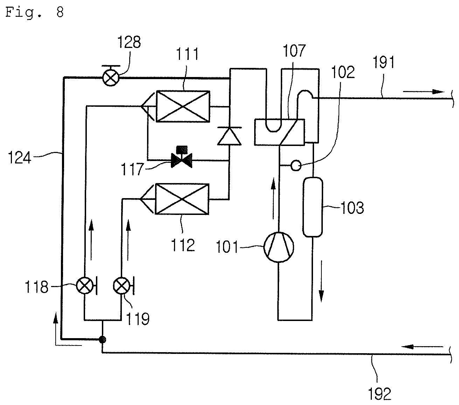

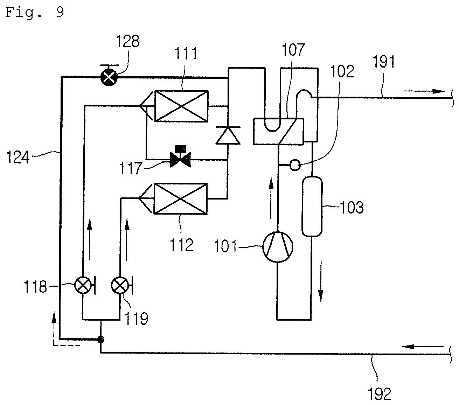

Fig. 7 is a flowchart illustrating a method of controlling the air conditioning system according to an embodiment, and Figs. 8 and 9 are views illustrating a process of controlling the bypass valve device when the cooling operation additionally operates during the heating operation in the air conditioning system according to an embodiment.

When the air conditioning system 10 performs the main heating operational cooling operation, the compressor 101 may operate to form the refrigerant cycle. Also, the refrigerant may be condensed in the heating indoor unit of the plurality of indoor units and be evaporated in the cooling indoor unit.

The refrigerant condensed while passing through the heating indoor unit may be decompressed in the second flow rate adjustment part 243 and then be mixed with the refrigerant evaporated in the cooling indoor unit to flow into the second connection tube 192.

That is, the two-phase refrigerant may be introduced into the outdoor unit 100 through the second connection tube 192. At least one portion of the refrigerant introduced into the outdoor unit 100 may flow into the bypass tube 124 and then be introduced into the outdoor gas/liquid separator 105 via the passage switching part 107.

The rest refrigerant of the refrigerant introduced into the outdoor unit may be introduced into the first and second heat exchange parts 111 and 112 through the first and second outdoor tubes 121a and 121b and then be evaporated while passing through the first and second heat exchange parts 111 and 112. Also, the evaporated refrigerant may be mixed with the refrigerant flowing into the bypass tube 124 and then be introduced into the outdoor gas/liquid separator 105 via the passage switching part 107 (S11, S12, and S13).

As described above, while the refrigerant cycle operates, the discharge temperature of the refrigerant in the compressor 101 may be detected. Also, the discharge temperature or discharge overheating degree of the refrigerant may be determined through the detected information. It is determined whether the discharge temperature or discharge overheating degree of the refrigerant is above a preset range (S15).

If the discharge temperature or discharge overheating degree of the refrigerant is above a preset range, it may be determined that an amount of refrigerant circulating the system, i.e., an amount of refrigerant suctioned into the compressor 101 is excessive. Thus, an opening degree of the bypass valve device 128 may increase as illustrated in Fig. 8. Thus, an amount of refrigerant flowing into the bypass tube 124 may increase (a solid arrow).

In this case, since a relatively large amount of two-phase refrigerant is introduced into the outdoor gas/liquid separator 105, a relatively small amount of gaseous refrigerant may be suctioned into the compressor 101. Thus, the discharge temperature or discharge overheating degree of the refrigerant may be controlled to decrease (S16).

On the other hand, if the discharge temperature or discharge overheating degree of the refrigerant is below the preset range, it may be determined that an amount of refrigerant circulating the system, i.e., an amount of refrigerant suctioned into the compressor 101 is lack. Thus, an opening degree of the bypass valve device 128 may decrease as illustrated in Fig. 9. Thus, an amount of refrigerant flowing into the bypass tube 124 may decrease (a dotted line arrow).

In this case, since a relatively small amount of two-phase refrigerant is introduced into the outdoor gas/liquid separator 105, a relatively large amount of gaseous refrigerant may be suctioned into the compressor 101. Thus, the discharge temperature or discharge overheating degree of the refrigerant may be controlled to increase (S17).

In the case of the main heating operational cooling operation, the pressure loss in the outdoor unit may be reduced through the above-described processes. Also, since the opening degree of the bypass valve device is adjusted on the basis of the discharge temperature or discharge overheating degree, an amount of refrigerant circulating in the system may be adequately adjusted.

According to the embodiments, the refrigerant condensed in the refrigeration cycle may be provided into the bypass structure, in which the refrigerant does not pass through the expansion device of the outdoor heat exchanger, but is bypassed into the inlet-side of the compressor, to reduce the pressure loss during the main heating operational simultaneous operation.

Also, the amount of bypassed refrigerant may be adjusted on the basis of the discharge temperature or discharge overheating degree of the refrigerant in the compressor to prevent the lacking of the refrigerant in the system from occurring, thereby improving the operation performance.

Also, the gas/liquid separation unit may be provided between the outdoor unit and the distribution unit, and the outdoor unit and the gas/liquid separation unit may be connected by two tubes to reduce material costs and the number of welded portions, thereby improving the installation reliability.

Also, the gas/liquid separation unit may be provided to perform the simultaneous operation, in which the cooling and heating operations are simultaneously performed in the air conditioning system, and a switchable operation, in which the cooling and heating operations are switched, in the same outdoor unit.

Also, since the gas/liquid separation unit is separably coupled to the outdoor unit and the distribution unit through the tube connection part, the gas/liquid separation unit may be easily installed and replaced.

Also, if the gas/liquid separation unit and the distribution unit are removed, the switchable operation through the outdoor unit and the indoor unit may be enabled.

## Claims

1. An air conditioning system (10) comprising:
an outdoor unit (100) configured to be disposed in an outdoor space, the outdoor unit (100) comprising a compressor (101) and an outdoor heat exchanger (111,112);
a plurality of indoor units (401,402,403) configured to be disposed in an indoor space, each of the plurality of indoor units (401,402,403) comprising an indoor heat exchanger and an expansion device; and
a distribution unit (300) configured to distribute and introduce a refrigerant into the plurality of indoor units (401,402,403), the distribution unit (300) including a plurality of distribution tubes (310, 312, 314) configured to guide introduction of the refrigerant into the plurality of indoor units (401,402,403) and discharge of the refrigerant passing through the plurality of indoor units (401,402,403),
wherein the outdoor unit (100) comprises:
an outdoor branch part (120) branched into a plurality of refrigerant paths;
a first outdoor tube (121a) extending from the outdoor branch part (120) to guide the refrigerant to a first heat exchange part (111) of the outdoor heat exchanger (111,112);
a first outdoor expansion device (118) provided in the first outdoor tube (121a) to adjust a flow of the refrigerant;
a second outdoor tube (121b) extending from the outdoor branch part (120) to guide the refrigerant to a second heat exchange part (112) of the outdoor heat exchanger (111,112);
a second outdoor expansion device (119) provided in the second outdoor tube (121b) to adjust a flow of the refrigerant;
a bypass tube (124) extending from the outdoor branch part (120) to allow the refrigerant to bypass the outdoor heat exchanger (111,112), thereby guiding the refrigerant to the compressor (101); and
a bypass valve device (128) disposed in the bypass tube (124) to adjust a flow rate of the refrigerant;
wherein
the air conditioning system (10) further comprises a gas/liquid separation unit (200) separably coupled to the outdoor unit (100); two tubes (191, 192) connecting the outdoor unit (100) to the gas/liquid separation unit (200); and three tubes (193, 194, 195) connecting the gas/liquid separation unit (200) to the distribution unit (300),
wherein the gas/liquid separation unit (200) comprises:
a gas/liquid separator (210) to separate the refrigerant discharged from the outdoor unit (100) into a gaseous refrigerant and a liquid refrigerant;
bridge circuits (221, 225) guiding the refrigerant introduced into the gas/liquid separation unit (200) through one of said two tubes (191,192);
a super-cooler (230) disposed at an outlet-side of the gas/liquid separator (210) and in which the liquid refrigerant separated in the gas/liquid separator (210) and a branched refrigerant in which at least one portion of the liquid refrigerant in a supercooling passage (231) is branched are heat-exchanged with each other;
a supercooling expansion device (235) disposed in the supercooling passage (231) for decompressing the branched refrigerant;
a supercooling outlet tube (245) disposed on an outlet-side of the super-cooler (230);
a first flow rate adjustment part (241) provided in the supercooling outlet tube (245) and configured to adjust an amount of the liquid refrigerant passing through the super-cooler (230);
a second flow rate adjustment part (243) disposed in a tube that extends from one point of the supercooling outlet tube (245) to the supercooling passage (231); and
a gas/liquid separation combination part (250) configured to mix the refrigerant with each other,
the supercooling passage (231) is branched off from the supercooling outlet tube (245) between an outlet of the super-cooler (230) and the first flow rate adjustment part (241) and extends to the gas/liquid separation combination part (250),
the plurality of distribution tubes (310, 312, 314) includes a first distribution tube (310) through which the gaseous refrigerant separated in the gas/liquid separator (210) flows via one (195) of said three tubes (193, 194, 195), a second distribution tube (312) connected to another of said three tubes (193, 194, 195) which is connected to a tube connection part (205) towards the gas/liquid separation combination part (250), and a third distribution tube (314) connected to the supercooling outlet tube (245) via the remaining tube (194) of said three tubes (193, 194, 195),
the first distribution tube (310) comprising: a first distribution valve (321) configured to control a flow rate of the refrigerant, and the second distribution tube (312) comprises a second distribution valve (323) configured to control a flow rate of the refrigerant, and
the bridge circuits (221, 225) comprising:
a first bridge tube (221), a second bridge tube (225),
a first check valve (221a) provided in the first bridge tube (221) and a second check valve (225a) provided in the second bridge tube (225), the first and second check valves (221a, 225a) being configured to guide the refrigerant in one direction in the tubes; and
a third check valve (226) disposed on a side of the bridge circuits (221, 225) configured to allow the refrigerant introduced into the gas/liquid separation unit (200) through a first connection tube (191) of said two tubes (191, 192) to be introduced into the first bridge tube (221),
wherein the first bridge tube (221) is configured to guide the refrigerant introduced into the gas/liquid separation unit (200) to the gas/liquid separator (210); and
the second bridge tube (221) is configured to guide the refrigerant of the gas/liquid separation unit (200) to the outdoor unit (100).

2. The air conditioning system according to claim 1, further comprising an outdoor gas/liquid separator (105) provided in an inlet-side of the compressor (101) to separate a gaseous refrigerant from the refrigerant,
wherein the refrigerants flowing into the first outdoor tube (121a), the second outdoor tube (121b), and the bypass tube (124) are mixed with each other and is introduced into the outdoor gas/liquid separator (105).

3. The air conditioning system according to claim 1, further comprising:
a discharge temperature sensor (102) detecting a discharge temperature of the refrigerant in the compressor (101); and
wherein the bypass valve device (128) comprises an electronic expansion valve, EEV,
wherein an opening degree of the bypass valve device (128) is adjusted on the basis of information detected by the discharge temperature sensor (102).

4. The air conditioning system according to claim 3, further comprising a controller (500) configured to control the bypass valve device (128) to increase in opening degree of the bypass valve device (128) when the discharge temperature or discharge overheating degree of the refrigerant, which is detected by the discharge temperature sensor (102), is above a preset range,
wherein the controller (500) is configured to control the bypass valve device (128) to decrease in opening degree of the bypass valve device (128) when the discharge temperature or discharge overheating degree of the refrigerant is below the preset range.

5. The air conditioning system according to any of claims 1 to 4, further comprising:
a variable passage (115) extending from the first heat exchange part to the second heat exchange part (112) of the outdoor heat exchanger (111,112); and
a variable valve (117) disposed on the variable passage (115) to selectively block a flow of the refrigerant flowing into the variable passage (115).

## Patentansprüche

1. Klimatisierungssystem (10), aufweisend:
eine Außeneinheit (100), die konfiguriert ist, um in einem Außenraum angeordnet zu sein, wobei die Außeneinheit (100) einen Kompressor (101) und einen Außenwärmetauscher (111, 112) aufweist;
eine Vielzahl von Inneneinheiten (401, 402, 403), die konfiguriert sind, um in einem Innenraum angeordnet zu sein, wobei jede der Vielzahl von Inneneinheiten (401, 402, 403) einen Innenwärmetauscher und eine Expansionsvorrichtung umfasst; und
eine Verteilungseinheit (300), die konfiguriert ist, um ein Kältemittel auf eine Vielzahl von Inneneinheiten (401, 402, 403) zu verteilen und darin einzuleiten, wobei die Verteilungseinheit (300) eine Vielzahl von Verteilungsrohren (310, 312, 314) einschließt, die konfiguriert sind, um die Einleitung des Kältemittels in die Vielzahl von Inneneinheiten (401, 402, 403) und die Ableitung des die Vielzahl von Inneneinheiten (401, 402, 403) passierenden Kältemittels zu lenken,
wobei die Außeneinheit (100) aufweist:
einen Außenverzweigungsteil (120), der in eine Vielzahl von Kältemittelwegen verzweigt ist;
ein erstes Außenrohr (121a), das sich vom Außenverzweigungsteil (120) erstreckt, um das Kältemittel zu einem ersten Wärmetauscherteil (111) des Außenwärmetauschers (111, 112) zu lenken;
eine erste Außenexpansionsvorrichtung (118), die im ersten Außenrohr (121a) bereitgestellt ist, um einen Fluss des Kältemittels einzustellen;
ein zweites Außenrohr (121b), das sich vom Außenverzweigungsteil (120) erstreckt, um das Kältemittel zu einem zweiten Wärmetauscherteil (112) des Außenwärmetauschers (111, 112) zu lenken;
eine zweite Außenexpansionsvorrichtung (119), die im zweiten Außenrohr (121b) bereitgestellt ist, um einen Fluss des Kältemittels einzustellen;
ein Umgehungsrohr (124), das sich vom Außenverzweigungsteil (120) erstreckt, um dem Kältemittel zu erlauben, den Außenwärmetauscher (111, 112) zu umgehen, wodurch das Kältemittel zum Kompressor (101) gelenkt wird; und
eine Umgehungsventilvorrichtung (128), die im Umgehungsrohr (124) angeordnet ist, um einen Durchfluss des Kältemittels einzustellen;
wobei
das Klimatisierungssystem (10) weiter eine Gas-Flüssigkeits-Abscheideeinheit (200), die separat mit der Außeneinheit (100) gekoppelt ist, zwei Rohre (191, 192), die die Außeneinheit (100) mit der Gas-Flüssigkeits-Abscheideeinheit (200) verbinden, und drei Rohre (193, 194, 195), die die Gas-Flüssigkeits-Abscheideeinheit (200) mit der Verteilungseinheit (300) verbinden, umfasst,
wobei die Gas-Flüssigkeits-Abscheideeinheit (200) aufweist:
einen Gas-Flüssigkeitsabscheider (210) zum Trennen des aus der Außeneinheit (100) abgeleiteten Kältemittels in ein gasförmiges Kältemittel und ein flüssiges Kältemittel;
Brückenschaltungen (221, 225), die das durch eines der beiden Rohre (191, 192) in die Gas-Flüssigkeits-Abscheideeinheit (200) eingeleitete Kältemittel lenken;
einen Unterkühler (230), der an einer Auslassseite des Gas-/Flüssigkeitsabscheiders (210) angeordnet ist und in dem zwischen dem im Gas-/Flüssigkeitsabscheider (210) abgetrennten flüssigen Kältemittel und einem verzweigten Kältemittel, bei dem mindestens ein Teil des flüssigen Kältemittels in einem Unterkühlerdurchlass (231) verzweigt wird, ein Wärmeaustausch stattfindet;
eine Unterkühlerexpansionsvorrichtung (235), die zum Dekomprimieren des verzweigten Kältemittels in dem Unterkühlerdurchlass (231) angeordnet ist;
ein Unterkühlerauslassrohr (245), das an einer Auslassseite des Unterkühlers (230) angeordnet ist;
einen ersten Durchflusseinstellungsteil (241), der in dem Unterkühlerauslassrohr (245) bereitgestellt ist und konfiguriert ist, um eine Menge des den Unterkühler (230) passierenden flüssigen Kältemittels einzustellen;
einen zweiten Durchflusseinstellungsteil (243), der in einem Rohr angeordnet ist, das sich von einem Punkt des Unterkühlerauslassrohrs (245) zum Unterkühlerdurchlass (231) erstreckt; und
einen Gas-/Flüssigkeitsabscheider-Kombinationsteil (250), der konfiguriert ist, um das Kältemittel miteinander zu mischen,
wobei der Unterkühlerdurchlass (231) vom Unterkühlerauslassrohr (245) zwischen einem Auslass des Unterkühlers (230) und dem ersten Durchflusseinstellungsteil (241) verzweigt ist und sich zum Gas-/Flüssigkeitsabscheider-Kombinationsteil (250) erstreckt,
die Vielzahl der Verteilungsrohre (310, 312, 314) ein erstes Verteilungsrohr (310), durch das das im Gas-/Flüssigkeitsabscheider (210) abgetrennte gasförmige Kältemittel über eines (195) der drei Rohre (193, 194, 195) fließt, ein zweites Verteilungsrohr (312), das mit einem anderen der drei Rohre (193, 194, 195) verbunden ist, das mit einem Rohrverbindungsteil (205) in Richtung des Gas-/Flüssigkeitsabscheider-Kombinationsteils (250) verbunden ist, und ein drittes Verteilungsrohr (314), das mit dem Unterkühlerauslassrohr (245) über das verbleibende Rohr (194) der drei Rohre (193, 194, 195) verbunden ist, einschließt,
wobei das erste Verteilungsrohr (310) ein erstes Verteilungsventil (321) umfasst, das konfiguriert ist, um einen Durchfluss des Kältemittels zu steuern, und das zweite Verteilungsrohr (312) ein zweites Verteilungsventil (323) umfasst, das konfiguriert ist, um einen Durchfluss des Kältemittels zu steuern, und
die Brückenschaltungen (221, 225) aufweisen:
ein erstes Brückenrohr (221), ein zweites Brückenrohr (225),
ein erstes Rückschlagventil (221a), das im ersten Brückenrohr (221) bereitgestellt ist, und ein zweites Rückschlagventil (225a), das im zweiten Brückenrohr (225) bereitgestellt ist, wobei das erste und das zweite Rückschlagventil (221a, 225a) konfiguriert sind, um das Kältemittel in eine Richtung in den Rohren zu lenken; und
ein drittes Rückschlagventil (226), das auf einer Seite der Brückenschaltungen (221, 225) angeordnet ist und konfiguriert ist, um dem Kältemittel zu erlauben, durch ein erstes Verbindungsrohr (191) der beiden Rohe (191, 192) in die Gas-Flüssigkeits-Abscheideeinheit (200) eingeleitet zu werden, um in das erste Brückenrohr (221) eingeleitet zu werden,
wobei das erste Brückenrohr (221) konfiguriert ist, um das in die Gas-Flüssigkeits-Abscheideeinheit (200) eingeleitete Kältemittel zum Gas-/Flüssigkeitsabscheider (210) zu lenken; und
das zweite Brückenrohr (221) konfiguriert ist, um das Kältemittel der Gas-Flüssigkeits-Abscheideeinheit (200) zur Außeneinheit (100) zu lenken.

2. Klimatisierungssystem nach Anspruch 1, weiter umfassend einen Außen-Gas-/Flüssigkeitsabscheider (105), der an einer Einlassseite des Kompressors (101) bereitgestellt ist, um ein gasförmiges Kältemittel von dem Kältemittel zu trennen,
wobei die Kältemittel, die in das erste Außenrohr (121a), das zweite Außenrohr (121b) und das Umgehungsrohr (124) fließen, miteinander gemischt werden und in den Außen-Gas-/Flüssigkeitsabscheider (105) eingeleitet werden.

3. Klimatisierungssystem nach Anspruch 1, weiter umfassend:
einen Ableittemperatursensor (102), der eine Ableittemperatur des Kältemittels im Kompressor (101) detektiert; und
wobei die Umgehungsventilvorrichtung (128) ein elektronisches Expansionsventil, EEV, umfasst,
wobei ein Öffnungsgrad der Umgehungsventilvorrichtung (128) auf der Basis von Informationen, die vom Ableittemperatursensor (102) detektiert werden, eingestellt wird.

4. Klimatisierungssystem nach Anspruch 3, weiter umfassend eine Steuerung (500), die konfiguriert ist, um die Umgehungsventilvorrichtung (128) zu steuern, um einen Öffnungsgrad der Umgehungsventilvorrichtung (128) zu erhöhen, wenn die Ableittemperatur oder der Ableitüberwärmungsgrad des Kältemittels, die/der vom Ableittemperatursensor (102) detektiert wird, oberhalb eines voreingestellten Bereichs liegt,
wobei die Steuerung (500) konfiguriert ist, um die Umgehungsventilvorrichtung (128) zu steuern, um einen Öffnungsgrad der Umgehungsventilvorrichtung (128) zu senken, wenn die Ableittemperatur oder der Ableitüberwärmungsgrad des Kältemittels unterhalb des voreingestellten Bereichs liegt.

5. Klimatisierungssystem nach einem der Ansprüche 1 bis 4, weiter umfassend:
einen variablen Durchlass (115), der sich vom ersten Wärmetauscherteil zum zweiten Wärmetauscherteil (112) des Außenwärmetauschers (111, 112) erstreckt; und
ein variables Ventil (117), das an dem variablen Durchlass (115) angeordnet ist, um einen Fluss des in den variablen Durchlass (115) fließenden Kältemittels zu blockieren.

## Revendications

1. Système de climatisation (10) comprenant :
une unité extérieure (100) configurée pour être disposée dans un espace extérieur, l'unité extérieure (100) comprenant un compresseur (101) et un échangeur de chaleur extérieur (111, 112) ;
une pluralité d'unités intérieures (401, 402, 403) configurées pour être disposées dans un espace intérieur, chaque unité intérieure de la pluralité d'unités intérieures (401, 402, 403) comprenant un échangeur de chaleur intérieur et un détendeur ; et
une unité de distribution (300) configurée pour distribuer et introduire un fluide frigorigène dans la pluralité d'unités intérieures (401, 402, 403), l'unité de distribution (300) comportant une pluralité de tubes de distribution (310, 312, 314) configurés pour guider l'introduction du fluide frigorigène dans la pluralité d'unités intérieures (401, 402, 403) et pour décharger le fluide frigorigène traversant la pluralité d'unités intérieures (401, 402, 403) ;
dans lequel l'unité extérieure (100) comprend :
une section de ramification extérieure (120) ramifiée en une pluralité de trajets de fluide frigorigène;
un premier tube extérieur (121a) s'étendant depuis la section de ramification extérieure (120) pour guider le fluide frigorigène vers une première section d'échange de chaleur (111) de l'échangeur de chaleur extérieur (111, 112) ;
un premier détendeur extérieur (118) fourni dans le premier tube extérieur (121a) pour ajuster un flux du fluide frigorigène ;
un deuxième tube extérieur (121b) s'étendant depuis la section de ramification extérieure (120) pour guider le fluide frigorigène vers une deuxième section d'échange de chaleur (112) de l'échangeur de chaleur extérieur (111, 112) ;
un deuxième détendeur extérieur (119) fourni dans le deuxième tube extérieur (121b) pour ajuster un flux du fluide frigorigène ;
un tube de dérivation (124) s'étendant depuis la section de ramification extérieure (120) pour permettre au fluide frigorigène de contourner l'échangeur de chaleur extérieur (111, 112) en guidant ainsi le fluide frigorigène au compresseur (101) ; et
un dispositif à soupape de dérivation (128) disposé dans le tube de dérivation (124) pour ajuster un débit du fluide frigorigène ;
dans lequel
le système de climatisation (10) comprend en outre une unité de séparation de gaz/liquide (200) couplée séparément à l'unité extérieure (100) ; deux tubes (191, 192) connectant l'unité extérieure (100) à l'unité de séparation de gaz/liquide (200) ; et trois tubes (193, 194, 195) connectant l'unité de séparation de gaz/liquide (200) à l'unité de distribution (300),
dans lequel l'unité de séparation de gaz/liquide (200) comprend :
un séparateur de gaz/liquide (210) pour séparer le fluide frigorigène déchargé de l'unité extérieure (100) en un fluide frigorigène gazeux et en un fluide frigorigène liquide ;
des circuits en pont (221, 225) guidant le fluide frigorigène introduit dans l'unité de séparation de gaz/liquide (200) à travers l'un desdits deux tubes (191, 192) ;
un super-refroidisseur (230) disposé sur un côté de sortie du séparateur de gaz/liquide (210) et dans lequel le fluide frigorigène liquide séparé dans le séparateur de gaz/liquide (210) et un fluide frigorigène ramifié, dans lequel au moins une partie du fluide frigorigène liquide dans un passage de super-refroidissement (231) est ramifiée sont soumis à un échange de chaleur l'un avec l'autre ;
un détendeur de super-refroidissement (235) disposé dans le passage de super-refroidissement (231) pour la décompression du fluide frigorigène ramifié ;
un tube de sortie de super-refroidissement (245) disposé sur un côté de sortie du super-refroidisseur (230) ;
une première section d'ajustement de débit (241) fournie dans le tube de sortie de super-refroidissement (245) et configuré pour ajuster une quantité du fluide frigorigène liquide traversant le super-refroidisseur (230) ;
une deuxième section d'ajustement de débit (243) disposée dans un tube qui s'étend depuis un point du tube de sortie de super-refroidissement (245) au passage de super-refroidissement (231) ; et
une section de combinaison de gaz/liquide (250) configurée pour mélanger le fluide frigorigène l'un avec l'autre,
le passage de super-refroidissement (231) est ramifié à partir du tube de sortie de super-refroidissement (245) entre une sortie du super-refroidisseur (230) et la première section d'ajustement de débit (241) et s'étend vers la section de combinaison de séparation de gaz/liquide (250),
la pluralité de tubes de distribution (310, 312, 314) comporte un premier tube de distribution (310) par l'intermédiaire duquel le fluide frigorigène gazeux séparé dans le séparateur de gaz/liquide (210) s'écoule par l'intermédiaire d'un (195) desdits trois tubes (193, 194, 195), un deuxième tube de distribution (312) connecté à un autre desdits trois tubes (193, 194, 195), qui est connecté à une section de connexion de tube (205) vers la section de combinaison de séparation de gaz/liquide (250), et un troisième tube de distribution (314) connecté au tube de sortie de super-refroidissement (245) par l'intermédiaire du tube restant (194) desdits trois tubes (193, 194, 195),
le premier tube de distribution (310) comprenant : une première soupape de distribution (321) configurée pour commander le débit du fluide frigorigène, et le deuxième tube de distribution (312) comprend une deuxième soupape de distribution (323) configurée pour commander un débit du fluide frigorigène, et
les circuits en pont (221, 225) comprenant :
un premier tube en pont (221), un deuxième tube en pont (225),
une première vanne de vérification (221a) fournie sur le premier tube en pont (221), et une deuxième soupape de vérification (225a) fournie dans le deuxième tube en pont (225), les première et deuxième soupapes de vérification (221a, 225a) étant configurées pour guider le fluide frigorigène dans une direction dans les tubes ; et
une troisième soupape de vérification (226) disposé sur un côté des circuits en pont (221, 225) configurés pour permettre au fluide frigorigène introduit dans l'unité de séparation de gaz/liquide (220) par l'intermédiaire d'un premier tube de connexion (191) desdits deux tubes (191, 192) d'être introduit dans le premier tube en pont (221) ;
dans lequel le premier tube en pont (221) est configuré pour guider le fluide frigorigène introduit dans l'unité de séparation de gaz/liquide (200) jusqu'au séparateur de gaz/liquide (210) ; et
le deuxième tube en pont (221) est configuré pour guider le fluide frigorigène de l'unité de séparation de gaz/liquide (200) vers l'unité extérieure (100).

2. Système de climatisation selon la revendication 1, comprenant en outre un séparateur extérieur de gaz/liquide (105) fourni dans un côté d'entrée du compresseur (101) pour séparer un fluide frigorigène gazeux du fluide frigorigène,
dans lequel les fluides frigorigènes s'écoulant dans le premier tube extérieur (121a), le deuxième tube extérieur (121b) et le tube de dérivation (124) sont mélangés les uns avec les autres et sont introduits dans le séparateur extérieur de gaz/liquide (105).

3. Système de climatisation selon la revendication 1, comprenant en outre :
un capteur de température de déchargement (102) détectant une température de déchargement du fluide frigorigène dans le compresseur (101) ; et
dans lequel le dispositif à soupape de dérivation (128) comprend une soupape de détente électronique, EEV,
dans lequel un degré d'ouverture du dispositif à soupape de dérivation (128) est ajusté sur la base des informations détectées par le capteur de température de déchargement (102).

4. Système de climatisation selon la revendication 3, comprenant en outre un dispositif de commande (500) configuré pour commander le dispositif à soupape de dérivation (128) pour augmenter le degré d'ouverture du dispositif à soupape de dérivation (128) lorsque la température de déchargement ou le degré de surchauffe de déchargement du fluide frigorigène, qui est détectée/détecté par le capteur de température de décharge (102), est supérieure/supérieur à une plage prédéfinie,
dans lequel le dispositif de commande (500) est configuré pour commander le dispositif à soupape de dérivation (128) pour diminuer le degré d'ouverture du dispositif à soupape de dérivation (128) lorsque la température de déchargement ou le degré de surchauffe de déchargement du fluide frigorigène est en dessous de la plage prédéfinie.

5. Système de climatisation selon l'une quelconque des revendications 1 à 4, comprenant en outre :
un passage variable (115) s'étendant depuis la première section d'échange de chaleur à la deuxième section d'échange de chaleur (112) de l'échangeur de chaleur extérieur (111, 112) ; et
une soupape variable (117) disposée sur le passage variable (115) pour bloquer de manière sélective un flux du fluide frigorigène s'écoulant dans le passage variable (115).
